# EUROPÄISCHE PATENTANMELDUNG

(11) **EP 1 320 005 A1**
(43) Veröffentlichungstag der Anmeldung: **18.06.2003**
(21) Anmeldenummer: 01129587.0
(22) Anmeldetag: 12.12.2001
(51) Int. Cl.: G06F 1/00

(54) **Verfahren zum Schutz von Software und/oder Daten vor unbefugter Nutzung**

(71) Anmelder: Ewert, Matthias, 51107 Köln (DE)
(72) Erfinder: Ewert, Matthias, 51107 Köln (DE)
(74) Vertreter: Hilleringmann, Jochen, Dipl.-Ing.

(57) **Zusammenfassung**

Bei dem Verfahren zum Schutz von Software und/oder Daten vor unbefugter Nutzung wird eine mit der Software geladene und/oder die Daten verarbeitende Hardware-Komponente mit einem Empfänger für elektromagnetische Wellen versehen. Ein Sender sendet mittels elektromagnetischer Wellen eine einzigartige Kennung zum Empfang durch den Empfänger aus. Die Hardware-Komponente verarbeitet nur dann die Software und/oder die Daten bestimmungsgemäß, wenn der Empfänger zumindest zu Beginn der Verarbeitung von dem Sender eine Nutzung der Software und/oder der Daten autorisierende Kennung empfangen hat.

## Beschreibung

Die Erfindung betrifft eine Vorrichtung zum Schutz vor unbefugter Software- und Datennutzung. Dabei wird die Berechtigung zur Nutzung anhand des Vorhandenseins elektromagnetischer Wellen überprüft. Diese Vorrichtung kann zum einen dazu dienen die Berechtigung zur Nutzung der gestarteten Software zu prüfen, zum anderen aber auch vor unbefugter Nutzung der in der Software bereitgestellten Daten und der dafür notwendigen Hardware, schützen.

### Stand der Technik

Derzeit wird Software mit folgenden Kopierschutzmechanismen, teilweise auch in Kombination, vor unbefugter Nutzung geschützt:
1. Kopierschutz auf Datenträger - Hierbei wird mittels verschiedener Methoden versucht das Kopieren der Daten unmöglich zu machen. Dieser Kopierschutz ist in den meisten Fällen einfach zu umgehen, da entsprechende Methoden relativ schnell verfügbar sind. Ist der Kopierschutz erfolgreich, schützt er nicht vor Mehrfachinstallation vom "Mutterdatenträger". Es wird also eher eine Verminderung der unbefugten Nutzung erreicht, nicht aber wirklich ein Schutz davor.
2. Hardwaredongle - Eine am Computer anzubringende Hardware schützt die Software. Hardwaredongle sind relativ teuer und schwierig zu produzieren. Oft werden durch das Anbringen eines Dongles (z.B. am Druckerport) andere Anwendungen erschwert oder unmöglich gemacht. Dongles werden daher meist nur für teure Spezialanwendungen genutzt.
3. Registriernummern - Zur Freischaltung der Software muss bei der Installation eine Nummer eingegeben werden. Registriernummern sind kein Schutz, da mit der Kopie eines Datenträgers natürlich auch die Nummer mitgegeben werden kann.
4. Onlinefreischaltung - Zur Freischaltung der Software muss über einen Onlinezugang unter Angabe von persönlichen Daten die Software aktiviert werden. Die Onlinefreischaltung hat mehrere Nachteile. Erstens müssen persönliche Daten angegeben werden. Eine legale Mehrfachnutzung auf verschiedenen Computern wird mit dieser Methode meist unmöglich, da die Freigabe an die Hardwareumgebung gekoppelt ist. Bei Veränderungen an der Hardware kann eine erneute Freischaltung notwendig werden. Die Software ist nicht sofort einsetzbar. Die Freischaltung funktioniert nur wenn ein Onlinezugang verfügbar ist. Hier sind Programme im Umlauf, die eine Onlineregistrierung vorgaukeln und damit die Software beliebig nutzbar macht.

Es ist also derzeit kein 100% Schutz vor unbefugter Nutzung verfügbar. Es entsteht den Softwareherstellern dadurch ein enormer wirtschaftlicher Schaden.

### Zusammenfassende Darstellung der Erfindung

Es soll ein wirksamer Schutz vor unbefugter Nutzung von Software erreicht werden. Dabei sollen Aufwand und Kosten auf ein Minimum reduziert werden. Dem berechtigten Nutzer sollen aber durch die Methode keine Nachteile entstehen, im Gegenteil soll hier durch die Erfindung die Installation und Nutzung vereinfacht werden, da keine Registriervorgänge mehr notwendig sind.

Zur Lösung dieser Aufgabe wird mit der Erfindung ein Verfahren zum Schutz von Software und/oder Daten vor unbefugter Nutzung vorgeschlagen, bei dem
- eine mit der Software geladene und/oder die Daten verarbeitende Hardware-Komponente mit einem Empfänger für elektromagnetische Wellen versehen wird,
- ein Sender mittels elektromagnetischer Wellen eine einzigartige Kennung zum Empfang durch den Empfänger aussendet und
- die Hardware-Komponente nur dann die Software und/oder die Daten bestimmungsgemäß verarbeitet, wenn der Empfänger zumindest zu Beginn der Verarbeitung von dem Sender eine Nutzung der Software und/oder der Daten autorisierende Kennung empfangen hat.

Gemäß der vorliegenden Erfindung wird der Sender von dem Benutzer der Software und/oder der Daten mitgeführt.

Vorteilhafterweise ist der Sender in oder an einem Zubehörteil der Software und/oder der Datennutzung, wie z.B. einer Datenträgerunterbringungsvorrichtung, insbesondere einer Hülle oder Kassette und/oder einem Handbuch untergebracht.

Vorzugsweise handelt es sich bei der Hardware-Komponente z.B. um einen Computer, einem Datenterminal oder einem Mobiltelefon.

Entgegen der bisherigen Kopierschutz - Methoden basiert die neue Erfindung darauf, dass die Software beliebig installiert, aber zur gleichen Zeit immer nur einmal genutzt werden kann.

In absehbarer Zeit werden alle Computer mit einem so genannten "Bluetooth" Interface ausgestattet sein, das die drahtlose Kommunikation mit dem Computer bzw. jeder mit diesem Interface ausgestatteten Hardware-Komponente (z.B. Mobiltelefon) ermöglicht (nähere Angaben hierzu finden sich unter www.bluetooth.org). Jeder Software kann dann ein kleiner Sender ("Transponder" Größe etwa 3cm x 3xm x 1cm) beigelegt werden. Dieser Sender strahlt eine weltweit einmalige Kennung aus. Entsprechende Vergabestellen werden mit der Einführung des Bluetooth-Standards eingerichtet und können somit die einzigartigen Kennungen vergeben. Bei Nutzung der Software, bzw. der zu schützender Daten, wird die Nummer über das Bluetooth Interface abgefragt. Ist in einem Umkreis von z.B. 10m (normale Zimmergröße wird voll abgedeckt) der entsprechende Transponder vorhanden, wird die Nutzung zugelassen andernfalls abgelehnt. Durch die Tatsache, dass der Transponder einmalig und nicht kopierbar ist, wird eine unbefugte Nutzung zu 100% ausgeschlossen.

Entgegen den bisherigen Methoden kann durch die neue Methode ein 100% Schutz vor unbefugter Nutzung erreicht werden. Die Herstellungskosten für die notwendigen Transponder dürften bei entsprechender Stückzahl im einstelligen Eurobereich liegen und damit eine sehr wirtschaftliche Lösung darstellen. Dem Softwarehersteller wird dadurch ein nicht unbedeutender Schaden durch illegale Nutzung erspart.

Dem Anwender werden auch die heute üblichen zum Teil lästigen Registrierungen erspart, da die neue Methode ohne zutun des Anwenders unbemerkt funktioniert.

### Anwendungsbeispiele

A) (siehe Zeichnung) Die Anwendung als Nutzungsberechtigung der Software auf Datenträgern. Auf dem Computer (1) wird von der CD(2) eine Software installiert und die Hülle in der sich der Transponder(3) befindet anschließend in einem Regal oder Schrank aufbewahrt. Der Transponder sendet seine Identifikation(4), die mit der Nummer auf der CD identisch ist. Bei Nutzung der Software wird durch das Bluetooth Interface des Computers die benötigte Nummer abgefragt. Werden Signale vom Transponder empfangen ist die Nutzung möglich.
B) Wird über das Internet eine Software erworben, wird von dem Lizenzgeber die Bluetooth ID des Rechners abgefragt und eine auf diese zugeschnittene Software zum Download bereit gestellt.
C) Legale Nutzung auf verschiedenen Rechnern. Die Software wird auf dem Desktop PC und einem Notebook installiert. Der legale Nutzer kann nun durch Mitnahme des Transponders die Software auf jedem seiner Rechner nutzen.
D) Deaktivierung der Software beim Verlassen des Raumes. In vielen Fällen, muss ein Computernutzer aus Sicherheitsgründen den Zugriff auf seinen Rechner durch Fremdpersonen schützen. Durch z.B. einen entsprechend durch die neue Erfindung geschützten Bildschirmschoner wird beim Verlassen des Sendebereiches (10m) die Software gesperrt. Nähert sich der Nutzer seinem Computer wieder, wird die Software automatisch freigegeben.
E) Schutz für Audio / Video CDs. Auch die Daten von Audio / Video CD können durch das neue System geschützt werden. Durch eine Kooperation von Geräteherstellern und Tonträgerindustrie, könnten natürlich auch CD oder DVD Player vor der Wiedergabe die ID der Hülle prüfen.

Zusammengefasst betrifft die Erfindung also ein Verfahren zum Schutz von Software und Daten vor unbefugter Nutzung durch Funk - basierte Identifikation, und zwar insbesondere im Zusammenspiel zwischen Hardware auf der einen und Software bzw. Daten auf der anderen Seite. Besondere Merkmale der Hardware (Transponder) sind dabei, dass die Identifikation über eine nicht änderbare Kennummer erfolgt und die zu schützende Software oder die zu schützenden Daten nur nutzbar sind, wenn sich die Hardware in der Nähe befindet. Anwendungsbeispiele sind
- der Schutz vor unbefugter Nutzung von auf Datenträgern befindlicher Software / Daten
- der Schutz vor unbefugter Nutzung von über Netzwerk, insbesondere auch Internet vertriebenen Software / Daten
- die automatische Deaktivierung bei Entfernen des Transponders
- der Schutz vor unbefugter Nutzung von Audio / Video Daten
- der Schutz vor unbefugter Nutzung von Softwaregetriebenen Endgeräten.

Die nachfolgenden Ansprüche beziehen sich auf alle genannten Ausführungsbeispiele und die sich daraus ergebenen Möglichkeiten.

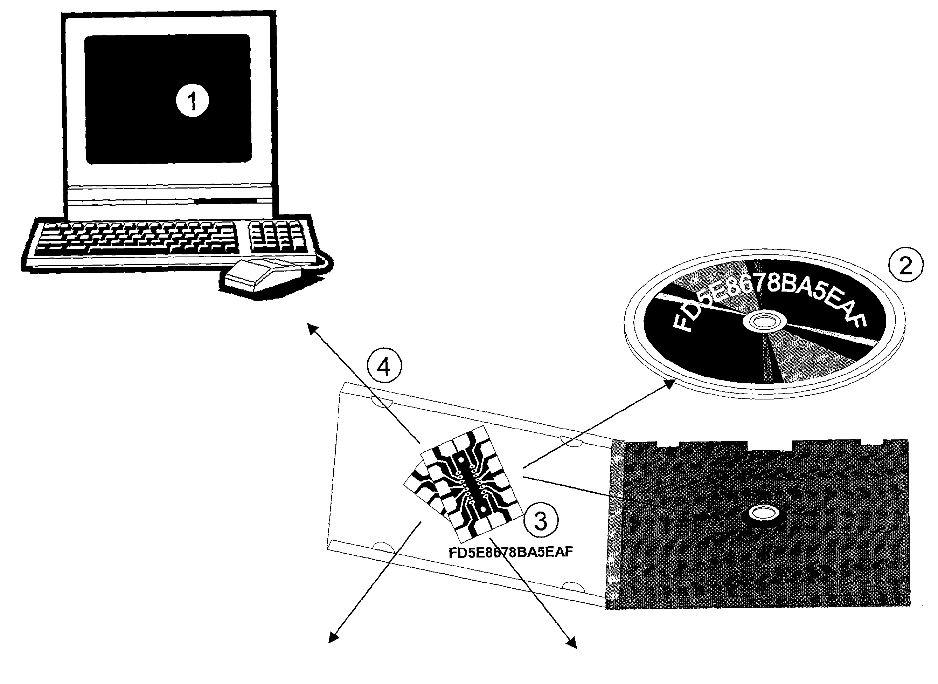

## Patentansprüche

1. Verfahren zum Schutz von Software und/oder Daten vor unbefugter Nutzung, bei dem
- eine mit der Software geladene und/oder die Daten verarbeitende Hardware-Komponente mit einem Empfänger für elektromagnetische Wellen versehen wird,
- ein Sender mittels elektromagnetischer Wellen eine einzigartige Kennung zum Empfang durch den Empfänger aussendet und
- die Hardware-Komponente nur dann die Software und/oder die Daten bestimmungsgemäß verarbeitet, wenn der Empfänger zumindest zu Beginn der Verarbeitung von dem Sender eine Nutzung der Software und/oder der Daten autorisierende Kennung empfangen hat.

2. Verfahren nach Anspruch 1, **dadurch gekennzeichnet, dass** der Sender von dem Benutzer der Software und/oder der Daten mitgeführt wird.

3. Verfahren nach Anspruch 1, **dadurch gekennzeichnet, dass** der Sender in oder an einem Zubehörteil der Software und/oder der Datennutzung, wie z.B. einer Datenträgerunterbringungsvorrichtung, insbesondere einer Hülle oder Kassette und/oder einem Handbuch untergebracht ist.

4. Verfahren nach einem der Ansprüche 1 bis 3, **dadurch gekennzeichnet, dass** es sich bei der Hardware-Komponente z.B. um einen Computer, einem Datenterminal oder einem Mobiltelefon handelt.
